# EUROPEAN PATENT SPECIFICATION

(11) **EP 1 927 540 B1**
(45) Date of publication and mention of the grant of the patent: **02.06.2010**
(21) Application number: 06256119.6
(22) Date of filing: 29.11.2006
(51) Int. Cl.: B62M 3/08

(54) **Bicycle pedal assembly**
Fahrradpedalanordnung
Assemblage de pédale de bicyclette

(43) Date of publication of application: 04.06.2008
(73) Proprietor: Wellgo Pedal's Corp., Taichung Hsien (TW)
(72) Inventor: Chen, Chung-I., Ta-chia Chen Taichung Hsien (TW)
(74) Representative: Mackenzie, Andrew Bryan

(56) References cited:
- EP-A1- 0 753 454
- EP-A2- 0 887 255
- US-A1- 2005 081 679
- US-A1- 2006 070 489
- US-A1- 2006 081 087

## Description

The invention relates to a pedal, more particularly to a bicycle pedal assembly.

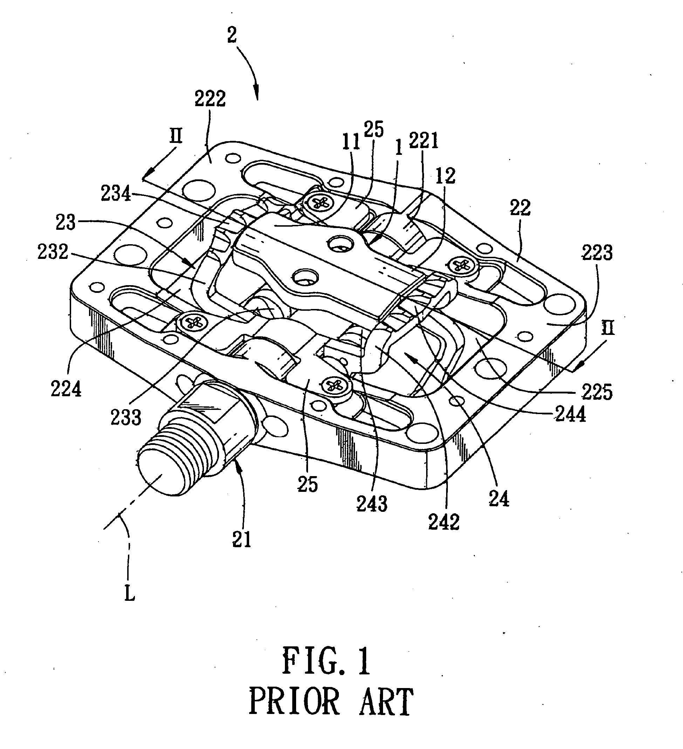

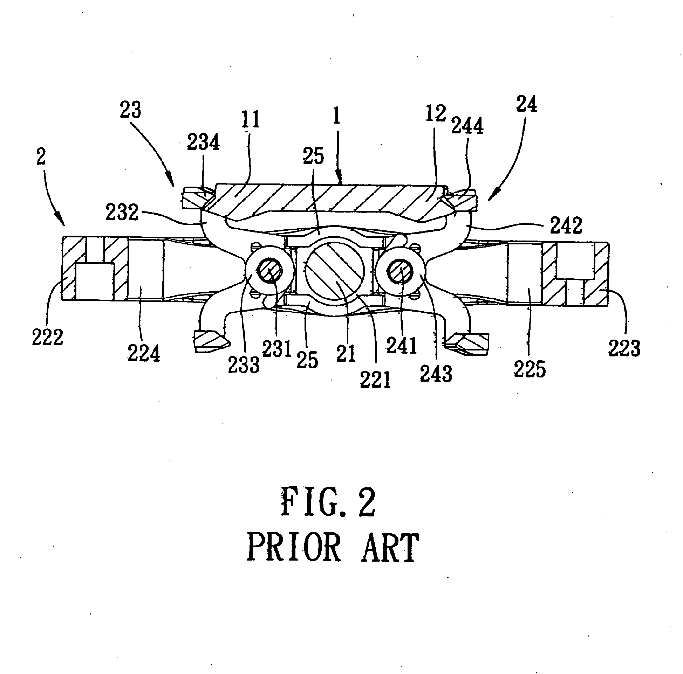

Referring to Figures 1 and 2, a conventional bicycle pedal assembly, as disclosed in closest prior art documentU.S. Patent Application Publication No. 2006/0070489, includes a cleat 1 and a pedal body unit 2. The cleat 1 is connected fixedly to a shoe sole of a cyclist, and includes front and rear end engaging portions 11, 12. The pedal body unit 2 includes a pedal shaft 21, a pedal body 22 sleeved on the pedal shaft 21, front and rear clamping units 23, 24, and inner and outer stop members 25 disposed on the pedal body 22.

The pedal shaft 21 extends along an L-axis. The pedal body 22 includes a sleeve tube 221 sleeved rotatably on the pedal shaft 21 and rotatable about the L-axis, front and rear portions 222, 223 connected to the sleeve tube 221 and extending in opposite directions, a front receiving space 224 defined by the front portion 222 and the sleeve tube 221, and a rear receiving space 225 defined by the rear portion 223 and the sleeve tube 221.

The front clamping unit 23 includes a front pivot pin 231 disposed within the front receiving space 224, a front clamping member 232 sleeved rotatably on the front pivot pin 231, and a front torsional spring 233 sleeved on the front pivot pin 231 for biasing the front clamping member 232 to rotate toward the sleeve tube 221. The front clamping member 232 has a front engaging portion 234 engaged to the front end engaging portion 11 of the cleat 1.

The rear clamping unit 24 includes a rear pivot pin 241 disposed within the rear receiving space 225, a rear clamping member 242 sleeved rotatably on the rear pivot pin 241, and a rear torsional spring 243 sleeved on the rear pivot pin 241 for biasing the rear clamping member 242 to rotate toward the sleeve tube 221. The rear clamping member 242 has a rear engaging portion 244 engaged to the rear end engaging portion 12 of the cleat 1.

In use, the cleat 1 is positioned on the pedal body unit 2, and is pressed downwardly so that the front and rear end engaging portions 11, 12 of the cleat 1 can engage respectively the front engaging portion 234 of the front clamping member 23 and the rear engaging portion 244 of the rear clamping member 24.

Although the aforementioned conventional bicycle pedal assembly can achieve its intended purpose, no adjusting mechanism is provided to allow for varying applications.

Therefore, the object of the present invention is to provide a bicycle pedal assembly that has an adjustable function to thereby allow for use in a variety of ways.

According to the invention as disclosed by the features of claim 1, a bicycle pedal assembly is adapted for engagement with a cleat which is fixed to a shoe sole. The bicycle pedal assembly comprises a pedal shaft, a pedal body, and front and rear clamping units. The pedal body includes a sleeve tube sleeved rotatably on the pedal shaft, and front and rear protruding portions connected to the sleeve tube and extending in opposite directions. The front clamping unit includes a front pivot pin, a front clamping member mounted rotatably on the front pivot pin, a front biasing member to bias the front clamping member to rotate toward the sleeve tube, and a locking member connected threadedly to the front protruding portion. The front clamping member has a front engaging portion that is adapted to engage one end of the cleat. The locking member, configured as a locking screw, is operable to abut against the front clamping member so as to lock the front clamping member against rotational movement. The rear clamping unit includes a rear clamping member mounted rotatably on the rear protruding portion, and a rear biasing member to bias the rear clamping member to rotate toward the sleeve tube. The rear clamping member has a rear engaging portion that is adapted to engage another end of the cleat. The front protruding portion has two front side walls, a front intermediate wall interconnecting the front side walls and a locking screw hole. The front clamping member has two spaced-apart front lugs projecting respectively from two opposite ends of the front engaging portion attached rotatably to the front pivot pin. The locking screw is engaged threadedly to the screw hole and is moveable to abut against one of the front lugs.

Other features and advantages of the present invention will become apparent in the following detailed description of the preferred embodiment with reference to the accompanying drawings, of which:
Figure 1 is a perspective view of a conventional bicycle pedal assembly disclosed in U.S. Patent Application Publication No. 2006/0070489;
Figure 2 is a sectional view of the conventional bicycle pedal assembly taken along line II-II of Figure 1;
Figure 3 is a perspective view of the preferred embodiment of a bicycle pedal assembly according to the present invention;
Figure 4 is an exploded perspective view of the preferred embodiment;
Figure 5 is a schematic top view of the preferred embodiment;
Figure 6 is a sectional view of the preferred embodiment taken along line VI-VI of Figure 5, illustrating how a locking member is moved to lock a front clamping member against rotational movement;
Figure 7 is a view similar to Figure 6, but illustrating how the locking member is moved to permit the rotational movement of the front clamping member relative to a front pivot pin;
Figure 8 is a sectional view of the preferred embodiment taken along line VIII-VIII of Figure 5, illustrating an adjusting member in a first position; and
Figure 9 is a view similar to Figure 8, but illustrating the adjusting member in a second position.

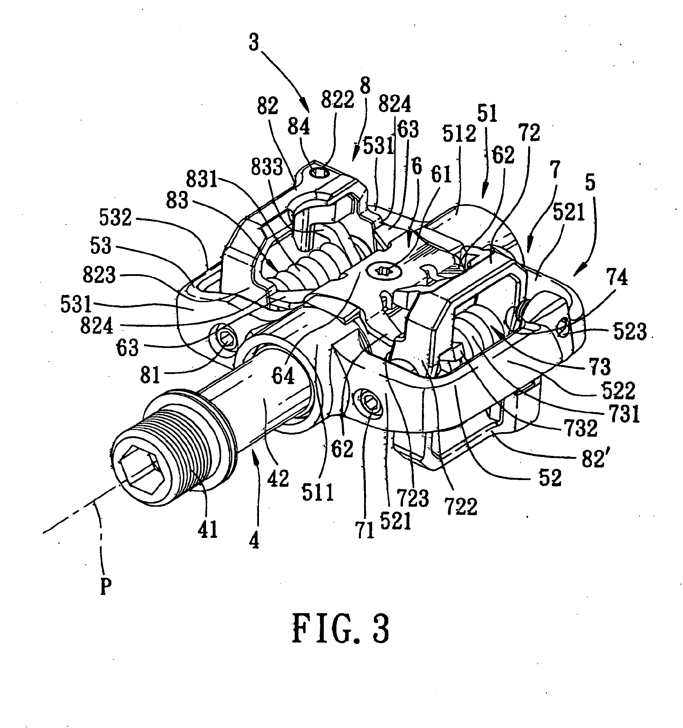

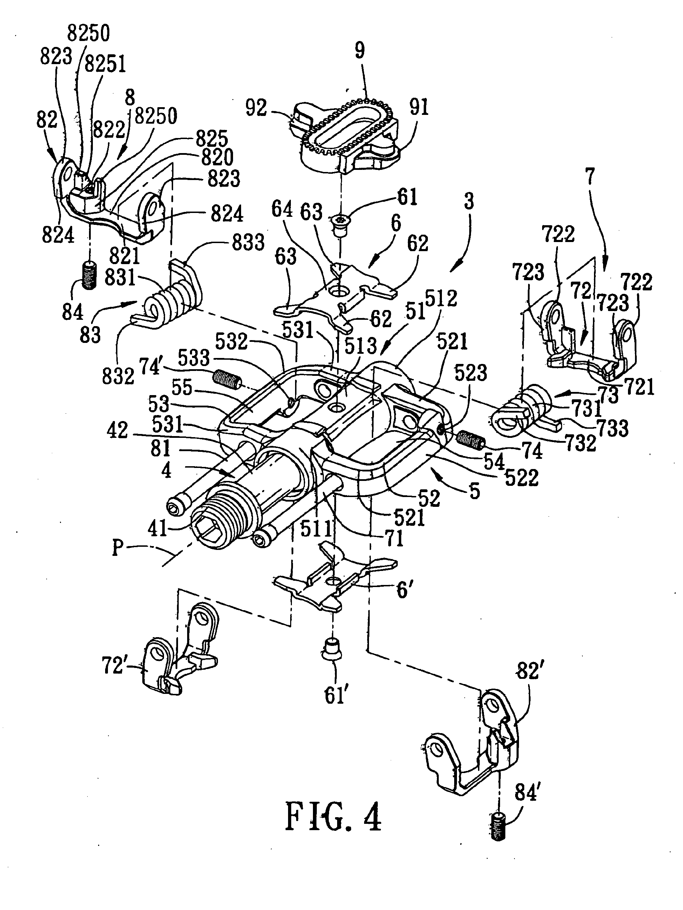

Referring to Figures 3 to 9, the preferred embodiment of a bicycle pedal assembly 3 according to the present invention is adapted for engagement with a cleat 9 which is fixed to a shoe sole, and is shown to comprise a pedal shaft 4, a pedal body 5, a front clamping unit 7, and a rear clamping unit 8. Since a right bicycle pedal assembly 3 is a mirror image of a left bicycle pedal assembly 3, only the left bicycle pedal assembly 3 will be described in this embodiment.

The pedal shaft 4 has a central axis (P), and includes an inner section 41 adapted to be connected to a bicycle' s pedal crank (not shown), and an outer section 42 opposite to the inner section 41. The inner and outer sections 41, 42 extend along the central axis (P).

The pedal body 5 includes a sleeve tube 51 sleeved on the outer section 42 of the pedal shaft 4 and rotatable about the central axis (P), and front and rear protruding portions 52, 53 connected to the sleeve tube 51 and extending in opposite directions. The sleeve tube 51 has an inner end portion 511 adjacent to the outer section 42 of the pedal shaft 4, an outer end portion 512 opposite to the inner end portion 511, and top and bottom faces 513, 513' between the inner and outer end portions 511, 512. The front protruding portion 52 has two front side walls 521 extending respectively and forwardly from the inner and outer end portions 511, 512 of the sleeve tube 51, and a front intermediate wall 522 interconnecting the front side walls 521. The front side walls 521, the front intermediate wall 522, and the sleeve tube 51 cooperatively define a front receiving space 54. The front intermediate wall 522 has a locking screw hole 523 that communicates with the front receiving space 54. The rear protruding portion 53 has two rear side walls 531 extending respectively and rearwardly from the inner and outer end portions 511, 512 of the sleeve tube 51, and a rear intermediate wall 532 interconnecting the rear side walls 531. The rear side walls 531, the rear intermediate wall 532, and the sleeve tube 51 cooperatively define a rear receiving space 55. The rear intermediate wall 532 has a locking screw hole 533 that communicates with the rear receiving space 55.

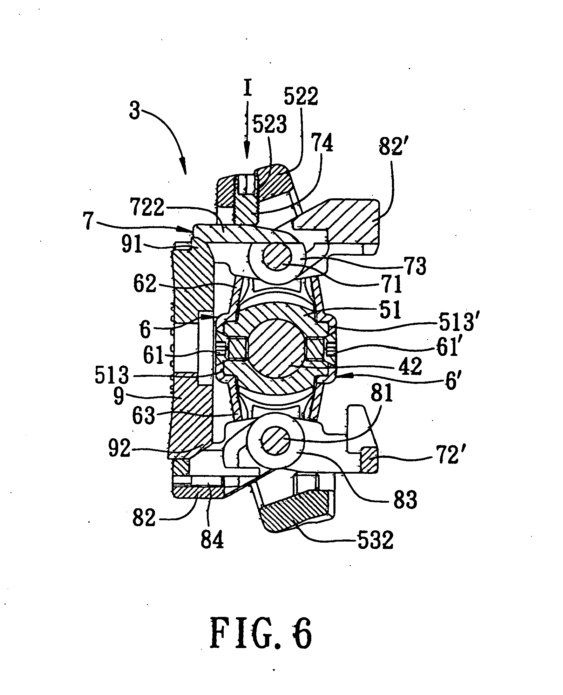

The front clamping unit 7 includes a front pivot pin 71 connected between the front side walls 521 and disposed within the front receiving space 54, a substantially U-shaped front clamping member 72 sleeved on the front pivot pin 71 and rotatable relative to the front protruding member 52, a front biasing member 73 sleeved on the front pivot pin 71 to bias the front clamping member 72 to rotate toward the sleeve tube 51, and a locking member 74 connected threadedly to the locking screw hole 523 in the front intermediate wall 522 of the front protruding portion 52. The front clamping member 72 has a front engaging portion 721 that is adapted to engage a front end 91 of the cleat 9, two spaced-apart front lugs 722 projecting respectively from two opposite ends of the front engaging portion 721 and attached rotatably to the front pivot pin 71, and two front stop faces 723 respectively provided on the front lugs 722. The locking member 74 is operable to move toward and abut against the front clamping member 72 so as to lock the front clamping member 72 against rotational movement, as best shown in Figure 6.

The rear clamping unit 8 includes a rear pivot pin 81 connected between the rear side walls 531 and disposed within the rear receiving space 55, a substantially U-shaped rear clamping member 82 sleeved on the rear pivot pin 81 and rotatable relative to the rear protruding portion 53, a rear biasing member 83 sleeved on the rear pivot pin 81, and an adjusting member 84 connected to the rear clamping member 82. The rear clamping member 82 has a web portion 820, a rear engaging portion 821 that is provided on the web portion 820 and that is adapted to engage a rear end 92 of the cleat 9, two spaced-apart rear lugs 823 projecting respectively from two opposite ends of the web portion 820, and two rear stop faces 824 respectively provided on the rear lugs 823. A screw-mounting block 825 projects from the web portion 820, and includes two legs 8250 projecting from the screw-mounting block 825 to define a groove 8251, and an adjusting screw hole 822 that extends through the screw-mounting block 825 and the web portion 820 and that is aligned with the groove 8251.

The bicycle pedal assembly 3 further comprises a rear clamping member 82' sleeved rotatably on the front pivot pin 71 and disposed below the front clamping member 72, an adjusting member 84' connected threadedly to the rear clamping member 82', a front clamping member 72' sleeved rotatably on the rear pivot pin 81 and disposed below the rear clamping member 82, a locking member 74' connected threadedly to the locking screw hole 533 in the rear intermediate wall 532 of the rear protruding portion 53, and a pedal cover 6' connected fixedly to the bottom face 513 of the sleeve tube 51 through a screw 61'. If the top face 513 of the sleeve tube 51 faces upwardly, the cleat 9 can be clamped between the front and rear clamping members 72, 82, and if the bottom face 513 of the sleeve tube 51 faces upwardly, the cleat 9 can be clamped between the front and rear clamping members 72', 82'.

In this embodiment, the front biasing member 73 is a torsional spring, and the locking member 74 is configured as a locking screw. The front biasing member 73 has a coiled body 731 sleeved on the front pivot pin 71, a first end leg 732 extending outwardly from one end of the coiled body 731 and abutting against the front clamping member 72, and a second end leg 733 extending outwardly from the other end of the coiled body 731 and abutting against the rear clamping member 82'. The rear biasing member 83 is a torsional spring having a coiled body 831 sleeved on the rear pivot pin 81, a first end leg 832 extending outwardly from one end of the coiled body 831 and abutting against the front clamping member 72', and a second end leg 833 extending outwardly from the other end of the coiled body 831 and extending into the groove 8251 so as to abut against the screw-mounting block 825 of the rear clamping member 82.

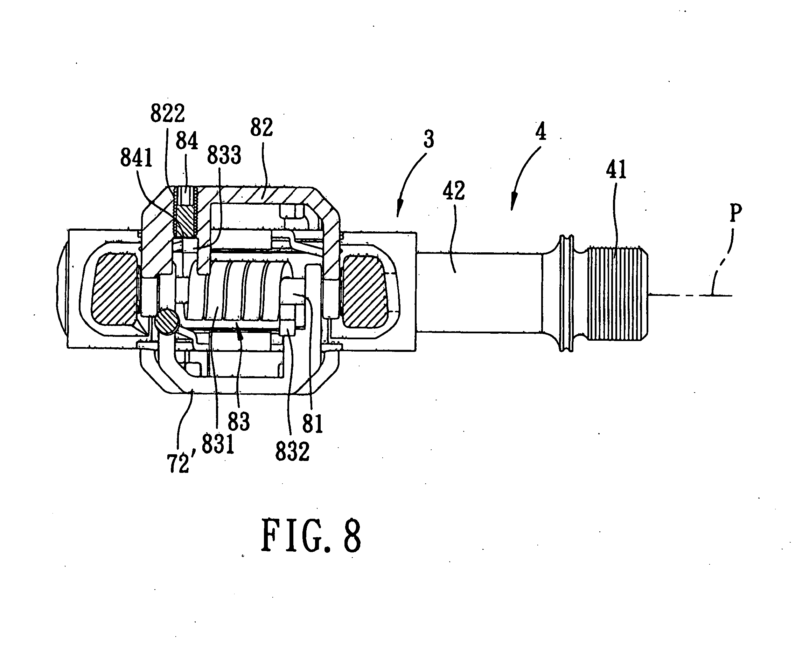

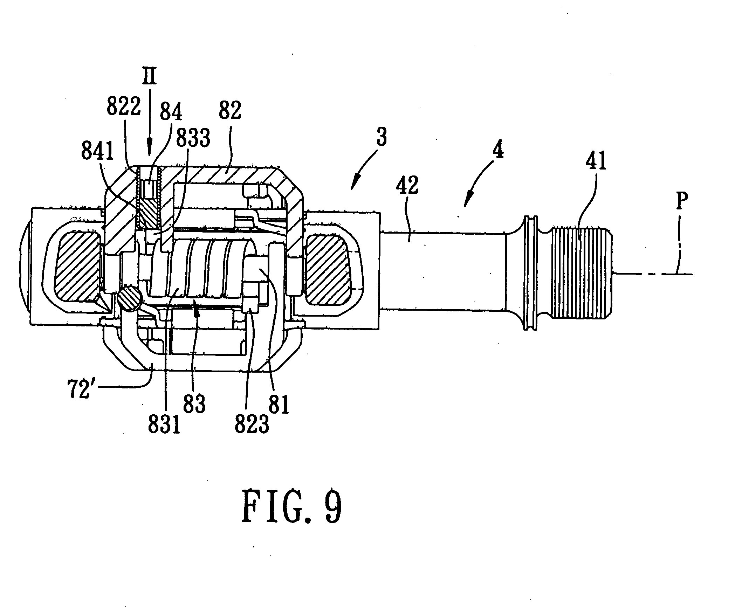

Alternatively, when only the front and rear clamping members 72, 82 are mounted on the pedal body 5 (i.e., the front and rear clamping members 72', 82' are not included in the configuration), the second end leg 733 of the front biasing member 73 abuts against a part of the front protruding portion 52, and the first end leg 832 of the rear biasing member 83 abuts against a part of the rear protruding portion 53.
The adjusting member 84, in this optional embodiment, is configured as an adjusting screw connected threadedly to the adjusting screw hole 822 and extending into the groove 8251 so as to press the second end leg 833 of the rear biasing member 83 downwardly. Alternatively, the adjusting member 84 may include a screw connected threadedly to the adjusting screw hole 822, and a connecting member which has one end abutting against the screw, and another end abutting against the second end leg 833 of the rear biasing member 83. The adjusting member 84 is movable relative to the rear clamping member 83 between a first position, as shown in Figure 8, where the adjusting member 84 causes the rear biasing member 83 to produce a minimum biasing force, and a second position, as shown in Figure 9, where the adjusting member 84 causes the rear biasing member 83 to produce a maximum biasing force.

The bicycle pedal assembly 3 further comprises a one-piece pedal cover 6 having a middle part 64 disposed over the sleeve tube 51, a pair of front wings 62 projecting from the middle part 64 and abutting against the front stop faces 723 of the front clamping member 72, a pair of rear wings 63 projecting from the middle part 64 and abutting against the rear stop faces 824 of the rear clamping member 82, and a fastener 61 fastening the middle part 64 to the top face 513 of the sleeve tube 51. To protect the pedal body 5 from wear due to the cleat 9, the pedal cover 6 is made of a material harder than that of the pedal body 5.

The front biasing member 73 biases the front clamping member 72 to rotate toward the sleeve tube 51 so that the front stop faces 723 abut respectively against the front wings 62 of the pedal cover 6. The rear biasing member 83 biases the rear clamping member 82 to rotate toward the sleeve tube 51 so that the rear stop faces 824 abut respectively against the rear wings 63 of the pedal cover 6.

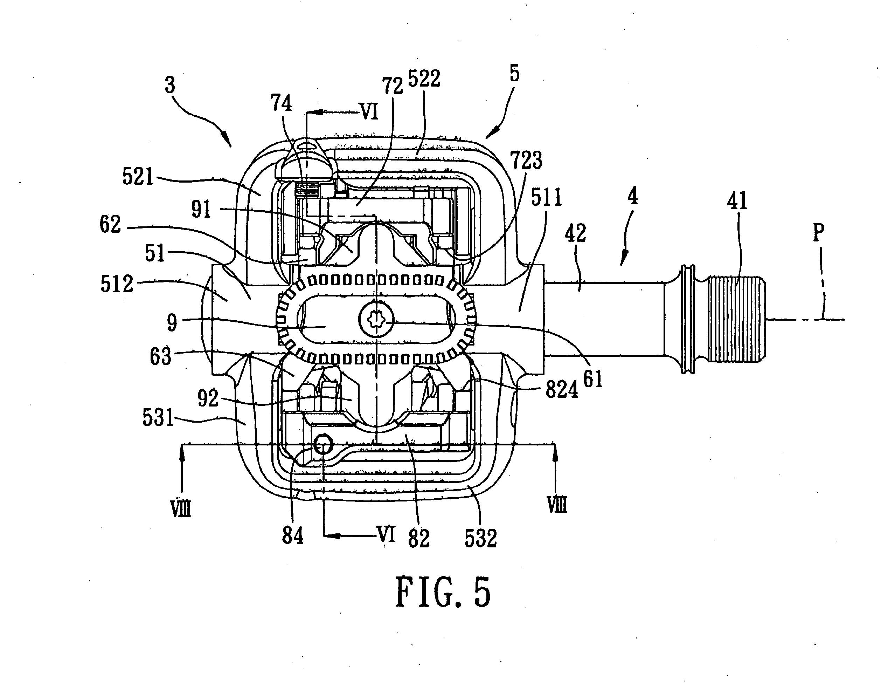

Referring to Figures 5 and 6, when the bicycle pedal assembly 3 is to be mounted on a racing bike or a mountain bike, the user may operate the locking member 74 in the direction of an arrow (I) until the locking member 74 abuts against the front clamping member 72, thereby locking the front clamping member 72 against rotational movement relative to the front pivot pin 71. As the front clamping member 72 is locked by the locking member 74, the front clamping member 72 will not rotate when the user exerts a pedaling force on the same so that the front clamping member 72 can transmit the exerted pedaling force directly to the pedal shaft 4. If the front clamping member 72 is allowed to rotate, it may absorb some of the exerted pedaling force so that energy loss may result during pedaling.

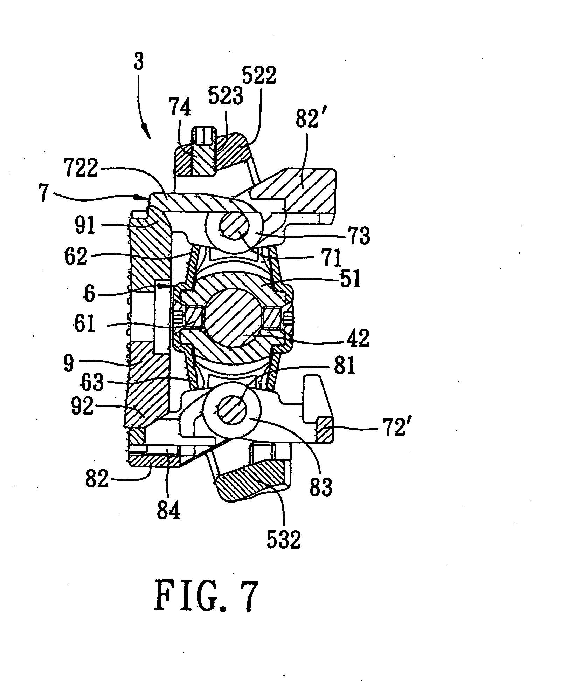

Referring to Figure 7, when the bicycle pedal assembly 3 is mounted on a bicycle for downhill or cross country riding, the locking member 74 is operated so as to be disposed within the locking screw hole 523, so that the front clamping member 72 can pivot relative to the front pivot pin 71. When the cleat 9 is twisted, the front and rear ends 91, 92 thereof push the front and rear clamping members 72, 82 to rotate away from the sleeve tube 51, so that the front and rear ends 91, 92 of the cleat 9 can be detached from the front and rear engaging portions 721, 821, respectively. It should be noted that even if the locking member 74 is removed from the locking screw hole 523, the front clamping member 72 can similarly pivot relative to the front pivot pin 71.

When the cleat 9 is twisted with a twisting force greater than the biasing force of the rear biasing member 83, the rear end 92 of the cleat 9 can push the rear clamping member 82 to pivot away from the sleeve tube 51 so that the cleat 9 can be removed from the front and rear clamping members 72, 82. However, if the twisting force is smaller than the biasing force of the rear biasing member 83, the cleat 9 cannot be removed from the front and rear clamping members 72, 82. Thus, in order to satisfy the different twisting forces exerted by different users on the cleat 9, the biasing force of the rear biasing member 83 can be adjusted through the adjusting member 84.

Referring to Figure 8, when a front end 841 of the adj usting member 84 does not exert any force on the second end leg 833 of the rear biasing member 83, the biasing force of the rear biasing member 83 is at a minimum, and the adjusting member 84 is located at the first position. However, referring to Figure 9, when the adjusting member 84 is moved along the direction of an arrow (II), the front end 841 of the adjusting member 84 presses the second end leg 833 of the rear biasing member 83 to deflect downward, thereby increasing the amount of deflection of the rear biasing member 83 that leads to an increased biasing force. The biasing force of the rear biasing member 83 is at a maximum at this time, and the adjusting member 84 is located at the second position.

## Claims

1. A bicycle pedal assembly (3) adapted for engagement with a cleat (9) which is fixed to a shoe sole, said bicycle pedal assembly (3) comprising:
a pedal shaft (4);
a pedal body (5) including a sleeve tube (51) sleeved rotatably on said pedal shaft (4), and front and rear protruding portions (52, 53) connected to said sleeve tube (51) and extending in opposite directions;
a front clamping unit (7) including a front pivot pin (71), a front clamping member (72) mounted rotatably on said front pivot pin (71), and a front biasing member (73) to bias said front clamping member (72) to rotate toward said sleeve tube (51); and
a rear clamping unit (8) including a rear clamping member (82) mounted rotatably on said rear protruding portion (53), and a rear biasing member (83) to bias said rear clamping member (82) to rotate toward said sleeve tube (51), said rear clamping member (82) having a rear engaging portion (821) that is adapted to engage one end (92) of the cleat (9); **characterized in that**
said front clamping unit (7) further includes a locking member (74) connected threadedly to said front protruding portion (52), said front clamping member (72) having a front engaging portion (721) that is adapted to engage another end (91) of the cleat (9), said locking member (74) being configured as a locking screw and being operable to abut against said front clamping member (72) so as to lock said front clamping member (72) against rotational movement;
said front protruding portion (52) has two front side walls (521), and a front intermediate wall (522) interconnecting said front side walls (521) and having a locking screw hole (523), said front clamping member (72) further having two spaced-apart front lugs (722) projecting respectively from two opposite ends of said front engaging portion (721) and attached rotatably to said front pivot pin (71), said locking screw (74) being engaged threadedly to said locking screw hole (523) and movable to abut against one of said front lugs (722).

2. The bicycle pedal assembly (3) of Claim 1, further **characterized by** a one-piece pedal cover (6) having a middle part (64) disposed over said sleeve tube (51), a pair of front wings (62) projecting from said middle part (64) and abutting against said front clamping member (72), a pair of rear wings (63) projecting from said middle part (64) and abutting against said rear clamping member (82), and a fastener (61) fastening said middle part (64) to said sleeve tube (51), said pedal cover (6) being made of a material harder than that of said pedal body (5).

## Patentansprüche

1. Fahrrad-Pedalbaugruppe (3), die für einen Eingriff mit einem an einer Schuhsohle befestigten Stollen (9) ausgebildet ist, wobei die Fahrrad-Pedalbaugruppe (3) Folgendes umfasst:
eine Pedal-Welle (4);
einen Pedalkörper (5), der ein Hülsenrohr (51), dass drehbar auf die Pedal-Welle (4) aufgeschoben ist, und vordere und hintere vorspringende Teile (52, 53) einschließt, die mit dem Hülsenrohr (51) verbunden sind und sich in entgegengesetzten Richtungen erstrecken;
eine vordere Klemmeinheit (7), die einen vorderen Schwenkbolzen (71), einen vorderen Klemmteil (72), der drehbar auf dem vorderen Schwenkbolzen (71) befestigt ist, und ein vorderes Vorspannelement (73) einschließt, um den vorderen Klemmteil (72) für eine Drehung in Richtung auf das Hülsenrohr (51) vorzuspannen; und
eine hintere Klemmeinheit (8), die einen hinteren Klemmteil (82), der drehbar auf dem hinteren vorspringenden Teil (53) befestigt ist, und ein hinteres Vorspannelement (83) zur Vorspannung des hinteren Klemmteils (82) für eine Drehung in Richtung auf das Hülsenrohr (51) einschließt, wobei der hintere Klemmteil (82) einen hinteren Eingriffsteil (821) aufweist, der für den Eingriff mit einem Ende (92) des Stollens (9) ausgebildet ist;
**dadurch gekennzeichnet, dass**
die vordere Klemmeinheit (7) weiterhin ein Verriegelungselement (74) einschließt, dass durch eine Schraubverbindung mit dem vorderen vorspringenden Teil (52) verbunden ist, wobei der vordere Klemmteil (72) einen vorderen Eingriffsteil (721) aufweist, der für einen Eingriff mit einem anderen Ende (91) des Stollens (9) ausgebildet ist, wobei das Verriegelungselement (74) als eine Verriegelungsschraube konfiguriert und für einen Anschlag gegen den vorderen Klemmteil (72) betreibbar ist, um den vorderen Klemmteil (72) gegen eine Drehbewegung zu verriegeln;
der vordere vorspringende Teil (52) zwei vordere Seitenwände (521) und eine vordere Zwischenwand (522) aufweist, die die vorderen Seitenwände (521) miteinander verbindet und eine Verriegelungsschrauben-Bohrung (523) aufweist, wobei der vordere Klemmteil (72) weiterhin zwei mit Abstand voneinander angeordnete vordere Laschen (722) aufweist, die jeweils von zwei entgegengesetzten Enden des vorderen Eingriffsteils (721) vorspringen und drehbar an dem vorderen Schwenkbolzen (71) angebracht sind, wobei die Verriegelungsschraube (74) in Schraubeingriff in der Verriegelungsschrauben-Bohru ng (523) steht und bewegbar ist, um gegen eine der vorderen Laschen (722) anzustoßen.

2. Fahrrad-Pedalbaugruppe (3) nach Anspruch 1, die weiterhin **gekennzeichnet ist durch** eine einstückige Pedalabdeckung (6) mit einem mittleren Teil (64), der über dem Hülsenrohr (51) angeordnet ist, mit einem Paar von vorderen Flügeln (62), die von dem Mittelteil (64) vorspringen und gegen den vorderen Klemmteil (72) anliegen, mit zwei hinteren Flügeln (63), die von dem mittleren Teil (64) vorspringen und gegen den hinteren Klemmteil (62) anliegen, und mit einem Befestigungsteil (61), der den mittleren Teil (64) an dem Hülsenrohr (51) befestigt, wobei die Pedalabdeckung (66) aus einem Material hergestellt ist, das härter als das des Pedal-Körpers (5) ist.

## Revendications

1. Assemblage de pédale de bicyclette (3) adaptée pour s'accoupler avec une cale (9) qui est fixée sur une semelle de chaussure, ledit assemblage de pédale de bicyclette (3) comprenant :
un arbre de pédalier (4) ;
un corps de pédale (5) qui comprend un tube à manchon (51) enfilé de manière rotative sur ledit arbre de pédalier (4), et des parties en saillie avant et arrières (52, 53) reliées audit tube à manchon (51) et s'étendant dans des directions opposées ;
une unité de fixation avant (7) qui comprend un axe d'articulation avant (71), un élément de fixation avant (72) monté de manière rotative sur ledit axe d'articulation avant (71), et un élément de déviation avant (73) destiné à dévier ledit élément de fixation avant (72) afin qu'il tourne vers ledit tube à manchon (51) ; et
une unité de fixation arrière (8) qui comprend un élément de fixation arrière (82) monté de manière rotative sur ladite partie en saillie arrière (53), et un élément de déviation arrière (83) destiné à dévier ledit élément de fixation arrière (82) afin qu'il tourne vers ledit tube à manchon (51), ledit élément de fixation arrière (82) ayant une partie d'accouplement arrière (821) qui est adaptée pour s'accoupler avec une extrémité (92) de la cale (9) ; **caractérisée en ce que**
ladite unité de fixation avant (7) comprend en outre un élément de blocage (74) relié par filetage à ladite partie en saillie avant (52), ledit élément de fixation avant (72) ayant une partie d'accouplement avant (721) qui est adaptée pour s'accoupler avec une autre extrémité (91) de la cale (9), ledit élément de blocage (74) étant configuré comme une vis de blocage et pouvant buter contre ledit élément de fixation avant (72) de façon à bloquer tout mouvement de rotation dudit élément de fixation avant (72) ;
ladite partie en saillie avant (52) possède deux parois latérales avant (521), et une paroi intermédiaire avant (522) qui relie lesdites parois latérales avant (521) et qui possède un trou de vis de blocage (523), ledit élément de fixation avant (72) ayant en outre deux pattes avant espacées (722) qui se projettent respectivement à partir des deux extrémités opposées de ladite partie d'accouplement avant (721) et attachées de manière rotative audit axe d'articulation avant (71), ladite vis de blocage (74) étant accouplée par filetage avec ledit trou de vis de blocage (523) et pouvant se déplacer de façon à buter contre l'une desdites pattes avant (722).

2. Assemblage de pédale de bicyclette (3) selon la revendication 1, **caractérisé en outre par** un patin de pédale monobloc (6) ayant une partie centrale (64) disposée par-dessus ledit tube à manchon (51), une paire d'ailettes avant (62) qui se projettent de ladite partie centrale (64) et qui butent contre ledit élément de fixation avant (72), une paire d'ailettes arrières (63) qui se projettent de ladite partie centrale (64) et qui butent contre ledit élément de fixation arrière (82), et une pièce de fixation (61) qui fixe ladite partie centrale (64) sur ledit tube à manchon (51), ledit patin de pédale (6) étant composé d'un matériau plus dur que celui dudit corps de pédale (5).
